# EUROPEAN PATENT SPECIFICATION

(11) **EP 2 614 872 B1**
(45) Date of publication and mention of the grant of the patent: **05.04.2023**
(21) Application number: 13150459.9
(22) Date of filing: 08.01.2013
(51) Int. Cl.: B01D 46/24, F01N 3/022

(54) **Honeycomb filter**
Wabenfilter
Filtre en nids d'abeilles

(30) Priority: 10.01.2012 JP 2012002357
(43) Date of publication of application: 17.07.2013
(73) Proprietor: NGK Insulators, Ltd., Nagoya-city, Aichi 467-8530 (JP)
(72) Inventor: Mizutani, Takashi, Nagoya city, Aichi 467-8530 (JP); Iwasaki, Shingo, Nagoya city, Aichi 467-8530 (JP)
(74) Representative: Mewburn Ellis LLP

(56) References cited:
- WO-A1-2011/125771
- WO-A1-2011/125773

## Description

This application claims the benefit of priority from Japanese patent application No. 2012-002357 (filed on 10 January 2012).

### Technical Field

The present invention relates to a honeycomb filter.

### Background Art

One proposed honeycomb filter includes a porous partition portion and a layer for trapping and removing particulate matter (hereinafter also referred to as PM) contained in an exhaust gas disposed on the partition portion. The porous partition portion is formed such that inlet cells that are open at one end and sealed at the other end and have a polygonal cross-section and outlet cells that are sealed at one end and open at the other end are alternately disposed (see, for example, Patent Literature 1). This honeycomb filter can trap PM using the trapping layer with low pressure loss.

### Citation List

### Patent Literature

PTL 1: JP 2010-214335 A
WO 2011/125773 describes a honeycomb filter in which catalysts are supported by wall portions and collecting layers such that a catalytic amount A of wall crossing portions is less than a catalytic amount B of central wall portions. The ratio A/B of the catalytic amount A to the catalytic amount B is preferably in the range of 0.30 to 0.90. In addition, the catalysts are supported such that a catalytic amount C of corner portions of the collecting layers is less than a catalytic amount D of central portions of the collecting layers. The ratio C/D of the catalytic amount C to the catalytic amount D is preferably in the range of 0.80 to 0.95.
WO 2011/125771 describes a honeycomb filter with a plurality of porous partition wall sections that form a plurality of cells, one end of which is made open and the other end of which is sealed so as to serve as an exhaust gas flow path, and trapping layers which are formed on the partition wall sections and trap/remove a solid component that is contained in the exhaust gas. The partition wall sections each have a catalyst supported on at least a part thereof, wherein 1.05≤a/b≤3.00 is satisfied when the amount of a catalyst in a partition wall section on the upstream side is set to a(g/L), and the amount of a catalyst in a partition wall section on the downstream side is set to b(g/L). A method for setting the a/b to a predetermined value includes a method by which the entire honeycomb structure constructed by the partition wall sections is brought into contact with a catalyst component to form a catalyst, and only the partition wall section on the upstream side is then brought into contact with the catalyst component to further form a catalyst.

### Disclosure of Invention

### Technical Problem

However, in such a honeycomb filter that includes a trapping layer on a partition portion, particles of the trapping layer enter a space between particles constituting the surface of the partition portion. Particles of the trapping layer entering the space between particles constituting the surface of the partition portion result in an increase in permeation resistance in the vicinity of the surface of the partition portion and an increase in pressure loss, in particular, when a fluid passes through the honeycomb filter at a high flow rate.

It is a principal object of the present invention to provide a honeycomb filter that has reduced pressure loss.

### Solution to Problem

In order to achieve the principal object, the present invention has employed the honeycomb filter as set out in the appended claim 1.

In this honeycomb filter, the trapping layer includes a high porosity region disposed on a surface of the partition portion and disposed in a space between particles constituting the surface of the partition portion. Thus, the honeycomb filter has lower permeation resistance in the vicinity of the surface of the partition portion than a honeycomb filter having no high porosity region. This can reduce pressure loss, for example, when a fluid passes through the honeycomb filter at a high flow rate. A space between particles constituting the surface of the partition portion is a region between a trapping layer end line of the partition portion and the outermost contour of the particle groups constituting the surface of the partition portion in a cross-section of the cell. The trapping layer end line of the partition portion is a tangent line of the surfaces of the particles closest to the trapping layer among the particles constituting the surface of the partition portion and is perpendicular to the thickness direction of the trapping layer. The outermost contour of the particle groups constituting the surface of the partition portion is a line indicating the outline of the partition portion in a cross-section of the cell and refers to a projector obtained by irradiating the partition surface with hypothetical parallel light parallel to the thickness direction of the trapping layer.

In a honeycomb filter according to the present invention, the high porosity region has a 10% or more higher porosity than the non-high-porosity region. This ensures a reduction in permeation resistance in the vicinity of the surface of the partition portion and ensures the effect of reducing pressure loss. The high porosity region preferably has a 20% or more higher porosity than the non-high-porosity region. The high porosity region may have a 30% or more or 40% or more higher porosity than the non-high-porosity region.

In a honeycomb filter according to the present invention, the high porosity region is formed to have a range of porosity of 96% or less. A porosity of 96% or less results in sufficient bonding strength between the trapping layer and the partition portion. For example, the trapping layer is rarely peeled off even when a fluid passes through the honeycomb filter at a high flow rate. The high porosity region may have a porosity of more than 45%, 50% or more, 55% or more, 60% or more, or 70% or more, and 90% or less, 80% or less, or 70% or less.

In a honeycomb filter according to the present invention, the high porosity region has a boundary side distance A of 40 µm or less. The boundary side distance A is a distance in the thickness direction of the trapping layer from an average line of an outermost contour of particles constituting the surface of the partition portion to the boundary between the high porosity region and the non-high-porosity region. This results in sufficient bonding strength between the trapping layer and the partition portion. For example, the trapping layer is rarely peeled off even when a fluid passes through the honeycomb filter at a high flow rate. In order to ensure the effect of reducing pressure loss, the boundary side distance A is preferably 10 µm or more and 40 µm or less, more preferably 20 µm or more and 40 µm or less, still more preferably 30 µm or more and 40 µm or less. The average line of the outermost contour is a line indicating the average level of the outermost contour in the thickness direction of the trapping layer and is drawn on the basis of the level and length of each line segment of the outermost contour. The boundary between the high porosity region and the non-high-porosity region is a line having a level at which the variation in density of the trapping layer is largest in the height direction of the trapping layer. The height direction corresponds to the thickness direction of the trapping layer. On the assumption that the direction from the high porosity region to the non-high-porosity region is positive, the boundary side distance A may be negative.

In a honeycomb filter according to the present invention, the high porosity region has a partition side distance B of 30 µm or less. The partition side distance B is a distance in the thickness direction of the trapping layer from an average line of an outermost contour of particles constituting the surface of the partition portion to an partition portion side end of a present area of particles constituting the high porosity region. When the partition side distance B is more than 30 µm, that is, when particles constituting the high porosity region are disposed in the partition portion within more than 30 µm from the average line of the outermost contour of the particle groups constituting the surface of the partition portion, even the presence of a small number of particles increases the permeation resistance of the partition portion. Thus, a partition side distance B of 30 µm or less can result in the prevention of increases in permeation resistance of the partition portion and pressure loss. In order to ensure the effect of reducing pressure loss, the partition side distance B is preferably 10 µm or more and 30 µm or less, more preferably 20 µm or more and 30 µm or less. On the assumption that the direction from the trapping layer to the partition portion is positive, the partition side distance B may be negative.

In a honeycomb filter according to one aspect of the present invention, the high porosity region may have a thickness direction distance C of 20 µm or more. The thickness direction distance C is a distance in the thickness direction of the trapping layer from the boundary between the high porosity region and the non-high-porosity region to an end of a present area of particles constituting the high porosity region on the partition portion side. This ensures the effect of reducing pressure loss. In order to ensure the effect of reducing pressure loss, the thickness direction distance C is preferably 30 µm or more, more preferably 40 µm or more, still more preferably 50 µm or more.

In a honeycomb filter according to the present invention, the present area of the high porosity region is an area of a length ratio N from the sealed end of the cell on the fluid outlet side relative to a total length from the open end of the cell to the sealed end, and the length ratio N is a value of 15% or more and 40% or less. When a fluid flows into the open end of the cell, the flow rate of the fluid passing through the trapping layer increases with decreasing distance from the sealed end on the outlet side. Thus, when the present area of the high porosity region has a certain length ratio N (N is 15% or more and 40% or less) from the sealed end so as to dispose the high porosity region in the trapping layer near the sealed end, this ensures the effect of reducing pressure loss. The length ratio N is preferably 20% or more and may be 20% or more and 25% or less, or 25% or more. The high porosity region does not necessarily exist in the entire area having the length ratio N from the sealed end defined as the present area of the high porosity region. For example, when the present area of the high porosity region has a length ratio N of 40% from the sealed end, the high porosity region may be absent in a portion of the area having a length ratio N in the range of 35% to 37%. In other words, a position represented by the length ratio N may be the high porosity region closest to the open end of the cell.

A honeycomb filter according to one aspect of the present invention may contain a catalyst. The catalyst can facilitate the removal of trapped solid components by combustion.

### Brief Description of Drawings

Fig. 1 is a schematic explanatory view of the structure of a honeycomb filter 20.
Fig. 2 is an explanatory view of a high porosity region of a trapping layer in SEM observation.
Fig. 3 is an explanatory view of the present area of a high porosity region of a trapping layer.
Fig. 4 is a schematic explanatory view of the structure of a honeycomb filter 40.
Figs. 5(a) and 5(b) are cross-sectional photographs of a downstream region of an inlet cell in the flow direction in Experimental Examples 4 and 7.
Fig. 6 is measurement results of pressure loss (kPa) at a high rotational speed under high load as a function of boundary side distance A (µm).
Fig. 7 is measurement results of pressure loss (kPa) at a high rotational speed under high load as a function of partition side distance B (µm).
Fig. 8 is measurement results of pressure loss (kPa) at a high rotational speed under high load as a function of thickness direction distance C (µm).
Fig. 9 is measurement results of pressure loss (kPa) at a high rotational speed under high load as a function of porosity Q(%).
Fig. 10 is measurement results of pressure loss (kPa) at a high rotational speed under high load as a function of porosity difference Q-P (%).
Fig. 11 is measurement results of pressure loss (kPa) at a high rotational speed under high load as a function of length ratio N (%).

### Description of Embodiments

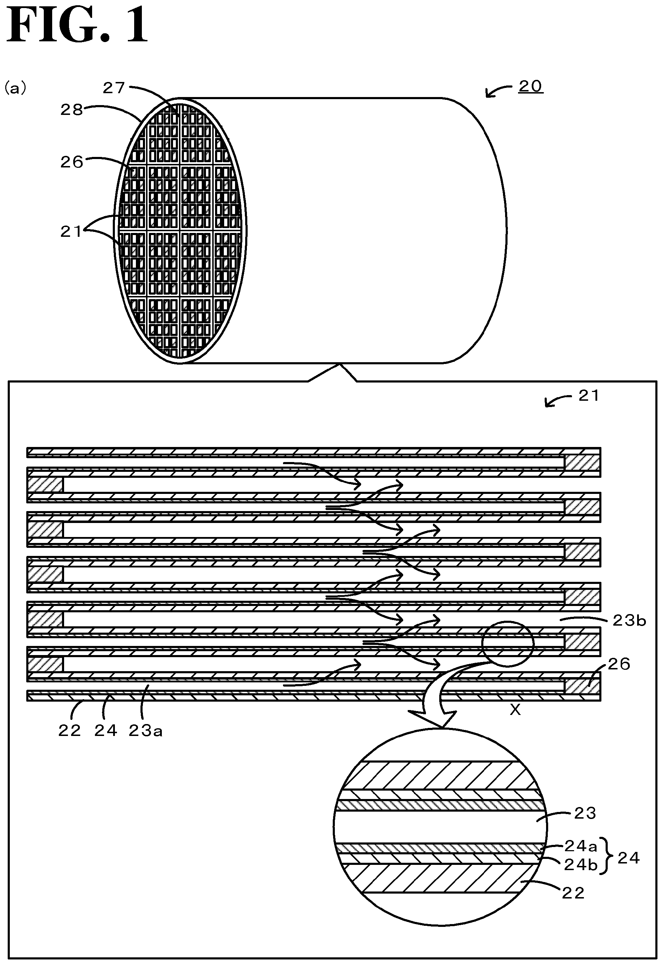

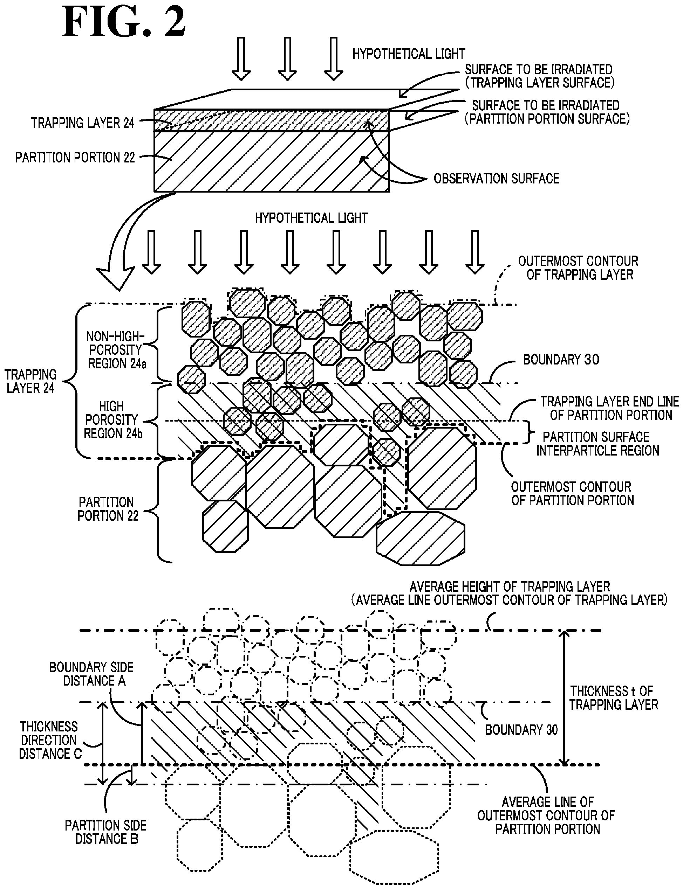

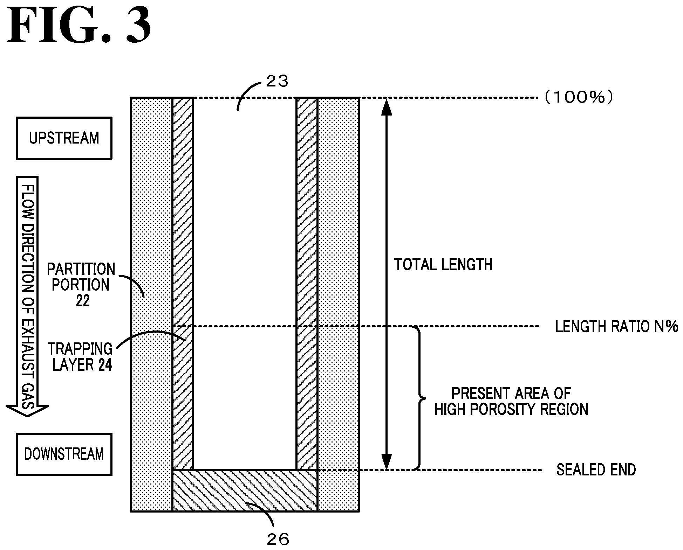

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a high porosity region of a trapping layer in SEM observation. Fig. 3 is an explanatory view of the present area of a high porosity region of a trapping layer. As illustrated in Fig. 1, a honeycomb filter 20 according to the present embodiment includes a plurality of porous partition portions 22 each forming a cell 23 serving as a flow path of a fluid, a sealing portion 26 for sealing an end of the cell 23, a trapping layer 24 for trapping solid components contained in the fluid, and the trapping layer 24 being disposed on each of the partition portions 22. The honeycomb filter 20 includes two or more honeycomb segments 21 joined together with a bonding layer 27. The honeycomb segments 21 include the partition portions 22. The honeycomb filter 20 is surrounded by an outer protective portion 28. Fig. 1 illustrates a cylindrical honeycomb filter 20, rectangular columnar honeycomb segments 21, and rectangular cells 23 as examples. The honeycomb filter 20 includes porous partition portions 22 each forming a cell 23, the cell being open at one end and sealed with a sealing portion 26 at the other end and serving as an exhaust gas flow path, and a trapping layer 24 for trapping solid components (PM) contained in a fluid (exhaust gas), the trapping layer being disposed on each of the partition portions 22. In the honeycomb filter 20, the partition portions 22 are formed such that cells 23 that are open at a first end and sealed at a second end and cells 23 that are sealed at the first end and open at the second end are alternately disposed. In the honeycomb filter 20, an exhaust gas enters an inlet cell 23, passes through the trapping layer 24 and the partition portion 22, and is exhausted from an outlet cell 23, during which PM in the exhaust gas is trapped on the trapping layer 24.

The partition portion 22 preferably has a thickness of 0.15 mm or more and 0.46 mm or less, more preferably 0.20 mm or more and 0.40 mm or less, still more preferably 0.28 mm or more and 0.35 mm or less. The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The partition portion 22 preferably has an average pore size of 10 µm or more and 60 µm or less. The porosity and the average pore size of the partition portion 22 are measured by a mercury intrusion method. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas disposed on each of the partition portions 22 may be formed of particle groups having an average particle size smaller than the average pore size of the partition portions 22. The average particle size of the raw material particles of the trapping layer 24 is preferably 0.5 µm or more and 15 µm or less. When the average particle size is 0.5 µm or more, the space between the particles of the trapping layer is large enough to maintain high permeability of the trapping layer and prevent a sudden increase in pressure loss. When the average particle size is 15 µm or less, the number of contacts between the particles is large enough to maintain high bond strength between the particles and high peel strength of the trapping layer. Although the trapping layer 24 may be formed on the partition portions 22 of exhaust gas inlet cells 23a and outlet cells 23b, as illustrated in Fig. 1, it is preferable to form the trapping layer 24 on the partition portions 22 of the inlet cells 23a and no trapping layer on the partition portions 22 of the outlet cells 23b. This allows PM contained in the fluid to be efficiently removed with decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, sialon, zirconium phosphate, zirconia, titania, and silica. Preferably, the trapping layer 24 is formed of the material of the partition portions 22. The trapping layer 24 may contain 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. The average particle size of raw material particles is the median size (D50) measured with a laser diffraction/scattering particle size distribution analyzer using water as a dispersion medium. The trapping layer 24 formed of particle groups made of an inorganic material may be formed as a uniform layer or a partial layer on the partition portions 22.

As illustrated in an enlarged view in Fig. 1, the trapping layer 24 has a high porosity region 24b on the partition portion 22 side. The other portion of the trapping layer 24 excluding the high porosity region 24b is referred to as a non-high-porosity region 24a. The high porosity region 24b has a higher porosity (or a lower density) than the non-high-porosity region 24a. The non-high-porosity region 24a preferably has an average pore size of 0.2 µm or more and 10 µm or less and a porosity of 40% by volume or more and 95% by volume or less. The average particle size of the particles of the trapping layer 24 is preferably 0.5 µm or more and 15 µm or less. An average pore size of 0.2 µm or more results in prevention of excessive initial pressure loss while no PM is deposited. An average pore size of 10 µm or less results in high PM trapping efficiency. These can reduce PM reaching the interior of a pore through the trapping layer 24 and reduce an increase in pressure loss during PM deposition. A porosity of 40% by volume or more results in the prevention of excessive initial pressure loss while no PM is deposited. A porosity of 95% by volume or less results in the formation of a surface layer serving as a durable trapping layer 24. When the average particle size of the particles of the trapping layer 24 is 0.5 µm or more, the space between the particles of the trapping layer 24 is large enough to maintain high permeability of the trapping layer 24 and prevent a sudden increase in pressure loss. When the average particle size of the particles of the trapping layer 24 is 15 µm or less, the number of contacts between the particles is large enough to maintain high bond strength between the particles and high peel strength of the trapping layer 24. Thus, it is possible to maintain high PM trapping efficiency, prevent a sudden increase in pressure loss immediately after the start of PM trapping, decrease pressure loss during PM deposition, and impart durability to the trapping layer.

The high porosity region 24b will be described below with reference to Fig. 2. Fig. 2 is an example of images (SEM images) acquired by scanning electron microscope (SEM) observation of a sample prepared by embedding a partition base material of the honeycomb filter 20 in a resin and polishing the surface. Such an image can be acquired as described below. First, the sample for observation is prepared by cutting and polishing such that a cross-section perpendicular to the fluid flow direction serves as an observation surface. An observation surface of a sample for observation is photographed at an SEM magnification in the range of 100 to 500 at a measuring point described below in a visual field of approximately 500 µm × 500 µm to acquire an image illustrated in Fig. 2. The definition of the high porosity region 24b in this image will be described below. In the image, the outermost contour of the partition portion 22 is hypothetically drawn. The outermost contour of the partition portion 22 is a line showing the outline of the partition portion 22 and refers to a projector obtained by irradiating a partition portion surface (a surface to be irradiated, see the top in Fig. 2) with hypothetical parallel light in the direction perpendicular to the partition portion surface (see the middle in Fig. 2). The outermost contour of the partition portion is composed of line segments corresponding to a plurality of top surfaces of the partition portion at different levels irradiated with hypothetical light and perpendicular lines each connecting line segments corresponding to adjacent top surfaces of the partition portion at different levels. The line segments corresponding to the top surfaces of the partition portion are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of the partition portion, the presence of the trapping layer 24 is disregarded. Subsequently, in the same manner as in the outermost contour of the partition portion, the outermost contour of the trapping layer is hypothetically drawn. The outermost contour of the trapping layer is a line showing the outline of the particle groups constituting a surface of the trapping layer 24 and refers to a projector obtained by irradiating the trapping layer surface (a surface to be irradiated, see the top in Fig. 2) with hypothetical parallel light in the direction perpendicular to the trapping layer surface (see the middle in Fig. 2). The outermost contour of the trapping layer is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the line segments corresponding to the top surfaces of the partition portion. For the porous trapping layer 24, in a sample for observation prepared by embedding in a resin and polishing, some particle groups are observed as if they floated in the air. The outermost contour is therefore drawn with the projector obtained by hypothetical light irradiation. A boundary 30 between the non-high-porosity region 24a and the high porosity region 24b in the trapping layer 24 is then hypothetically drawn (see the middle in Fig. 2). The boundary 30 is a line having a level at which the variation in density of the trapping layer is largest in the height direction of the trapping layer. The height direction corresponds to the thickness direction of the trapping layer. The boundary 30 is drawn as described below. The pixel concentrations of an SEM image are summed in a direction perpendicular to the height direction of the trapping layer 24 (the horizontal direction in Fig. 2). The total of the pixel concentrations is calculated for each level of the trapping layer 24. The point having the largest variation in the total of the pixel concentrations in the height direction (a point having a maximum derivative value of the total of the pixel concentrations) is then chosen. The boundary 30 is drawn at the level of the point. In SEM images, pixels including particles have high concentrations (bright), and pixels including no particles have low concentrations (dark). Thus, the boundary 30 between the non-high-porosity region 24a and the high porosity region 24b is determined in this manner. A region between the boundary 30 and the outermost contour of the partition portion is defined as the high porosity region 24b. A region between the boundary 30 and the outermost contour of the trapping layer is defined as the non-high-porosity region 24a (see the middle in Fig. 2). The high porosity region 24b includes a partition surface interparticle region, which is a region between particles constituting the surface of the partition portion 22 (see the middle in Fig. 2). As illustrated in the middle in Fig. 2, the partition surface interparticle region is a region between a trapping layer end line of the partition portion and the outermost contour of the partition portion in the cross-section. The trapping layer end line of the partition portion is a tangent line of the surfaces of the particles closest to the trapping layer 24 among the particles constituting the surface of the partition portion 22 and is perpendicular to the thickness direction of the trapping layer 24. The trapping layer 24 includes the high porosity region 24b including the partition surface interparticle region and therefore has lower permeation resistance in the vicinity of the surface of the partition portion 22 than that having no high porosity region 24b. This can reduce pressure loss, for example, when a fluid passes through the honeycomb filter 20 at a high flow rate.

The high porosity region 24b is formed in an area having a porosity Q of 96% or less. This can maintain the strength of the trapping layer 24, and the trapping layer 24 is rarely peeled off, for example, when a fluid passes through the honeycomb filter 20 at a high flow rate. As the porosity Q increases, for example, to more than 45%, 50% or more, 55% or more, 60% or more, or 70% or more, the effect of reducing pressure loss increases. As the porosity Q decreases, for example, to 90% or less, 80% or less, or 70% or less, the effect of maintaining the strength of the trapping layer 24 increases. The porosity Q is 10% or more higher than the porosity of the non-high-porosity region 24a (hereinafter referred to as porosity P (%)). This ensures a reduction in permeation resistance in the vicinity of the surface of the partition portion 22 and ensures the effect of reducing pressure loss. The porosity Q is preferably 20% or more higher than the porosity P. The porosity Q may be 30% or more or 40% or more higher than the porosity P. The porosities P and Q are determined as described below. First, an SEM image of an observation surface is binarized to divide the pixels of the SEM image into a particle portion and a non-particle portion. The number of pixels in the non-particle portion in the non-high-porosity region 24a is divided by the total number of pixels (the total number of pixels in the particle portion and the non-particle portion) to determine the porosity P. Likewise, the number of pixels in the non-particle portion in the high porosity region 24b is divided by the total number of pixels to determine the porosity Q.

These parameters of the high porosity region 24b, that is, the boundary side distance A, the partition side distance B, and the thickness direction distance C will be described below. First, the average line of the outermost contour of the partition portion is drawn on the basis of the levels and lengths of the line segments of the outermost contour corresponding to the top surfaces of the partition portion thus drawn (see the bottom in Fig. 2). The distance between the average line of the outermost contour of the partition portion and the boundary 30 in the thickness direction of the trapping layer is referred to as the boundary side distance A of the high porosity region 24b (see the bottom in Fig. 2). On the assumption that the direction from the high porosity region 24b to the non-high-porosity region 24a (upward in Fig. 2) is positive, the boundary side distance A is 40 µm or less. This results in sufficient bonding strength between the trapping layer 24 and the partition portion 22. For example, the trapping layer 24 is rarely peeled off even when a fluid passes through the honeycomb filter 20 at a high flow rate. In order to ensure the effect of reducing pressure loss, the boundary side distance A is preferably 10 µm or more and 40 µm or less, more preferably 20 µm or more and 40 µm or less, still more preferably 30 µm or more and 40 µm or less. The boundary side distance A is not limited to 0 µm or more and may be a negative value. In other words, the boundary 30 may be disposed below the average line of the outermost contour of the partition portion in Fig. 2.

The partition side distance B is the distance in the thickness direction of the trapping layer between the average line of the outermost contour of the partition portion and an end of the present area of the particles constituting the high porosity region 24b on the partition portion side (see the bottom in Fig. 2). On the assumption that the direction from the trapping layer 24 to the partition portion 22 (downward in Fig. 2) is positive, the partition side distance B is 30 µm or less. When the partition side distance B is more than 30 µm, even the presence of a small number of particles increases the permeation resistance of the partition portion 22. Thus, a partition side distance B of 30 µm or less can result in the prevention of increases in permeation resistance of the partition portion 22 and pressure loss. In order to ensure the effect of reducing pressure loss, the partition side distance B is preferably 10 µm or more and 30 µm or less, more preferably 20 µm or more and 30 µm or less. The partition side distance B is not limited to 0 µm or more and may be a negative value. In other words, all the particles constituting the high porosity region 24b may be disposed above the average line of the outermost contour of the partition portion in Fig. 2.

The thickness direction distance C of the trapping layer 24 is the distance in the thickness direction of the trapping layer 24 between the boundary 30 and the end of the present area of the particles constituting the high porosity region 24b on the partition portion 22 side (see the bottom in Fig. 2). In other words, the thickness direction distance C is the absolute value of (the boundary side distance A + the partition side distance B). The thickness direction distance C is preferably 20 µm or more. This ensures the effect of reducing pressure loss. In order to ensure the effect of reducing pressure loss, the thickness direction distance C is preferably 30 µm or more, more preferably 40 µm or more, still more preferably 50 µm or more.

The present area of the high porosity region 24b in the fluid flow direction of the cell 23 will be described below. When an exhaust gas flows into the open end of the cell 23 illustrated in Fig. 1, the flow rate of the exhaust gas passing through the trapping layer 24 and PM deposition increase with decreasing distance from the end sealed with the sealing portion 26. Thus, when the high porosity region 24b is disposed in the trapping layer 24 near the sealed end, this ensures the effect of reducing pressure loss on the surface of the partition portion 22. As illustrated in Fig. 3, the present area of the high porosity region 24b has a length ratio N of more than 15% and 40% or less. The length ratio N (%) is a ratio of the length of the high porosity region 24b from the sealed end on the outlet side to the total length from the open end of the cell 23 on the exhaust gas inlet side to the outlet sealed end of the cell 23. The length ratio N is a ratio of a length from the portion in the present area of the high porosity region 24b closest to the upstream side of the exhaust gas to the sealed end on the outlet side relative to the total length. For example, a length ratio N of 40% means that the present area of the high porosity region 24b extends upstream to 40% of the total length from the sealed end on the outlet side. The length ratio N is preferably 20% or more and may be 20% or more and 25% or less, or 25% or more. The high porosity region 24b does not necessarily exist in the entire area having the length ratio N from the sealed end defined as the present area of the high porosity region 24b.

The thickness t of the trapping layer 24 will be described below. In the same manner as in the average line of the outermost contour of the partition portion, the average level of the trapping layer is determined on the basis of the levels and lengths of the line segments of the outermost contour corresponding to the top surfaces of the trapping layer thus drawn. The average level of the trapping layer is the average line of the outermost contour of the trapping layer (see the bottom in Fig. 2). The difference (length) between the average level of the trapping layer and the average line of the outermost contour of the partition portion is considered to be the thickness t of the trapping layer 24 (the thickness of the particle groups) in the image. In this manner, the thickness t of the trapping layer 24 can be determined.

The trapping layer 24 having the high porosity region 24b may be formed by using a high porosity region forming member that can be removed later. For example, while drawn in by suction from the outlet side of the honeycomb filter 20 (the honeycomb segments 21), an air mist of water mixed with a high porosity region forming member is supplied from the inlet cell using a spray nozzle. After the high porosity region forming member is deposited on the partition portion 22, the trapping layer 24 is formed, and the high porosity region forming member is removed, thereby forming the trapping layer 24 having the high porosity region 24b. When the high porosity region forming member is supplied as a mist, water mixed with the high porosity region forming member deposited on the partition portion 22 increases permeation resistance and increases the difference in permeation resistance between the deposited portion and an undeposited portion. This facilitates the deposition of the mist on the undeposited portion, allowing uniform deposition of the high porosity region forming member on the partition portion 22. When a mist, rather than a gas, such as air, is used as a medium for transferring the high porosity region forming member, the flow rate of the mist can be decreased because of its increased viscosity. This facilitates the control of the deposition of the high porosity region forming member. The morphology of the high porosity region 24b, such as the boundary side distance A, the partition side distance B, or the thickness direction distance C, can be adjusted by changing the mixing ratio of the high porosity region forming member to water, the average particle size, the particle size distribution, and the material of the high porosity region forming member, and the feed rate of the mist. The porosity Q of the high porosity region 24b can also be adjusted. Furthermore, the length ratio N of the high porosity region forming member thus supplied can be controlled by adding an alcohol, water, or a resin in advance to the partition portion 22 in a predetermined region, such as an upstream region or a downstream region, of the honeycomb filter 20 (the honeycomb segments 21) so as to increase the permeation resistance to the mist. The high porosity region forming member may be mixed with another liquid other than water to form a mist. The high porosity region forming member may be a member that can be consumed by heat treatment or a member that can be dissolved in a solvent. A member that can be consumed by heat treatment is preferred. This is because the high porosity region 24b can be formed simultaneously with the firing of the trapping layer 24, and this can simplify the manufacturing process. Examples of the member that can be consumed by heat treatment include carbon particles, such as carbon black particles, graphite particles, and coke particles, starch particles, cellulose particles, powdered sugar, and resin particles, such as polyethylene particles, polypropylene particles, acryl particles, nylon particles, and phenol particles. Among these, materials that can be burned at lower temperature, for example, carbon black particles and starch particles are preferred. The high porosity region forming member is preferably particles having a particle size smaller than the pore size of the partition portion 22, preferably 0.001 or more and 0.50 or less times, more preferably 0.01 or more and 0.40 or less times, the average pore size of the partition portion 22. The high porosity region forming member preferably has an average particle size of 0.01 µm or more and 20 µm or less, more preferably 0.1 µm or more and 12 µm or less. The mist containing the high porosity region forming member may be supplied to the cell 23 by pressurization from the inlet side and suction from the outlet side. After the high porosity region forming member is deposited on the partition portion 22 and in the vicinity of the sealing portion 26, the high porosity region forming member is removed by removal treatment. When a high porosity region forming member that can be consumed by heat treatment is used, the heat-treatment temperature is preferably 400°C or more and 1000°C or less in an oxidizing atmosphere. In the case that the trapping layer 24 and the high porosity region 24b are formed at the same time as described below, the trapping layer 24 may be formed at 650°C or more and 1350°C or less. Thus, the high porosity region 24b can be relatively easily formed by using the high porosity region forming member. A method for forming the high porosity region 24b is not limited to the method described above. For example, a slurry containing the high porosity region forming member may be put into the cell 23 to deposit the high porosity region forming member on the surface of the partition portion 22.

After the high porosity region forming member is deposited, the trapping layer 24 may be formed by supplying a fluid containing the raw material for the trapping layer to an inlet cell using the fluid as a transport medium for the raw material for the trapping layer. This is preferred because the particle groups constituting the trapping layer become coarse and can form the trapping layer having a high porosity. The trapping layer is preferably formed after the high porosity region forming member is deposited. The fluid serving as a transport medium is preferably a gas, such as air or a nitrogen gas. The raw material for the trapping layer may be inorganic fiber or inorganic particles. The inorganic fiber may be the inorganic fiber described above or fiber of the inorganic material described above and preferably has an average particle size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

Methods for measuring the length ratio N, the thickness t, the boundary side distance A, the partition side distance B, and the porosities P and Q will be described below. First, a method for measuring the length ratio N will be described below. A honeycomb filter 20 to be measured is cut into 40 equal pieces in the longitudinal direction. The cut surfaces are polished to prepare 40 samples for observation, the cross-sections of which are perpendicular to the fluid flow direction. Five observation surfaces in the cross-section of the sample for observation are observed, including the central observation surface of the cross-section and four observation surfaces located above, below, and to the left and right of the central observation surface. The outermost contour of the partition portion, the outermost contour of the trapping layer, and the boundary 30 are hypothetically drawn in each observation surface of the 40 samples for observation by the method described above. The observation surface is checked for the high porosity region in the trapping layer. More specifically, for example, if the difference between the porosity of a region between the boundary 30 and the outermost contour of the partition portion and the porosity of a region between the boundary 30 and the outermost contour of the trapping layer is equal to or more than a predetermined threshold (for example, a few percent), then the trapping layer in the observation surface is considered to have a high porosity region. The threshold may be empirically determined from the variations in porosity of the trapping layer in the absence of the high porosity region and measurement errors. If at least one of the five observation surfaces in the cross-section has a high porosity region, then the sample for observation is considered to have a high porosity region. The 40 samples for observation are observed in the same manner. The length ratio N is determined from the position of the cross-section of the most upstream sample among the samples for observation having a high porosity region.

Methods for measuring the thickness t, the boundary side distance A, the partition side distance B, and the porosities P and Q will be described below. Among the 40 samples for observation, the sample for observation the cross-section of which is closest to a position 10% of the total length upstream from the downstream end (the sealed end) is chosen. The total length is a length from the open end of the cell 23 on the exhaust gas inlet side to the outlet sealed end of the cell 23. The thickness t, the boundary side distance A, the partition side distance B, and the porosities P and Q of this sample for observation are considered to be the thickness t, the boundary side distance A, the partition side distance B, and the porosities P and Q of the honeycomb filter 20 to be measured. The thickness t, the boundary side distance A, the partition side distance B, and the porosities P and Q are measured at the five observation surfaces in the sample for observation by the methods described above, and the measurements are independently averaged. The thickness t, the boundary side distance A, the partition side distance B, and the porosities P and Q of the sample for observation the cross-section of which is closest to a position 10% of the total length upstream from the downstream end are considered to be the thickness t, the boundary side distance A, the partition side distance B, and the porosities P and Q of the honeycomb filter 20. This is because pressure loss depends mainly on the characteristics measured in the vicinity of the position 10% of the total length upstream from the downstream end.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may contain one or more materials selected from aluminosilicate, alumina, silica, zirconia, ceria, and mullite. The inorganic fiber preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The outer protective portion 28 is a layer for protecting the periphery of the honeycomb filter 20 and may contain the inorganic particles, the inorganic fiber, and the binding material described above.

In the honeycomb filter 20, the thermal expansion coefficients of the honeycomb filter 20 at a temperature in the range of 40°C to 800°C in the longitudinal direction of the cells 23 are preferably 6.0 × 10⁻⁶/°C or less, more preferably 1.0 × 10⁻⁶/°C or less, still more preferably 0.8 × 10⁻⁶/°C or less. At a thermal expansion coefficient of 6.0 × 10⁻⁶/°C or less, thermal stress generated by exposure to a high-temperature exhaust gas can be within tolerance.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells 23 may be polygonal, such as triangular, tetragonal, hexagonal, or octagonal, circular, or streamlined, such as elliptical, or combination thereof. For example, the cells 23 may have a tetragonal cross section perpendicular to the exhaust gas flow direction.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

In the honeycomb filter 20, at least one of the partition portion 22 and the trapping layer 24 may contain a catalyst. The catalyst may be at least one of a catalyst for promoting the combustion of trapped PM, a catalyst for oxidizing unburned gases (HCs, CO, and the like) contained in an exhaust gas, and a catalyst for occluding/adsorbing/decomposing NOx. The catalyst can increase the efficiency of burning PM, oxidizing unburned gases, or decomposing NOx. The catalyst more preferably contains at least one of noble metal elements and transition metal elements. The honeycomb filter 20 may be loaded with another catalyst or a purification material. Among those are a NOx storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOx can more highly purify an exhaust gas.

The honeycomb filter 20 according to the embodiment described above includes a trapping layer 24 having a high porosity region 24b and therefore has lower permeation resistance in the vicinity of the surface of the partition portion 22 than a honeycomb filter having no high porosity region 24b. This can reduce pressure loss, for example, when a fluid passes through the honeycomb filter 20 at a high flow rate.

The present invention is not limited to the embodiments described above and can be implemented in various aspects within the scope of the present claims .

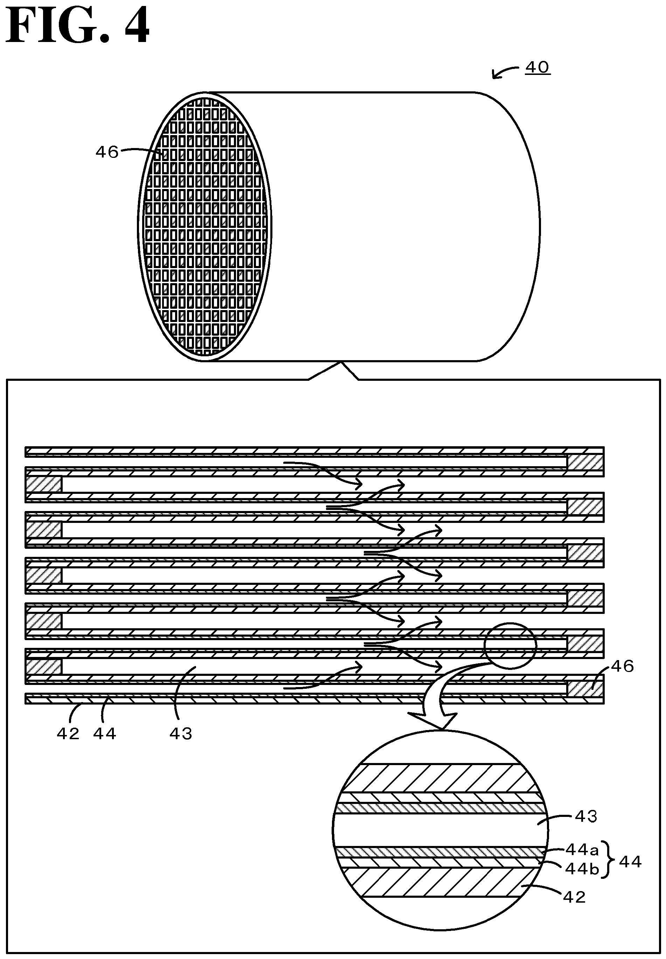

Although the honeycomb segments 21 are joined together with the bonding layer 27 in the honeycomb filter 20 according to the present embodiment, an integrally molded honeycomb filter 40 as illustrated in Fig. 4 is also suitable. In the honeycomb filter 40, partition portions 42, cells 43, trapping layers 44, non-high-porosity regions 44a, high porosity regions 44b, and sealing portions 46 may be the same as the partition portions 22, the cells 23, the trapping layers 24, the non-high-porosity regions 24a, the high porosity regions 24b, and the sealing portions 26 of the honeycomb filter 20. This can also reduce pressure loss, for example, when a fluid passes through the honeycomb filter 40 at a high flow rate.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 traps PM contained in an exhaust gas in the present embodiment, any honeycomb filter that traps and removes solid components in a fluid may be envisaged. Such a honeycomb filter may be a honeycomb filter for an engine of construction equipment or a honeycomb filter for a factory or a power plant.

Although the inlet cells 23a and the outlet cells 23b have the same opening area in the embodiments described above, outlet cells that are sealed at a first end and open at a second end and inlet cells that are open at the first end and sealed at the second end and have a larger opening area than the outlet cells may be alternately disposed. This can enhance the flow of an exhaust gas and facilitate trapping of PM.

### Examples

Specific experimental examples of the manufacture of a honeycomb filter will be described below. A honeycomb filter including honeycomb segments joined together was manufactured.

### Process of Forming Honeycomb Segment

A SiC powder and a metallic Si powder were mixed at a mass ratio of 80:20. The resulting mixture was kneaded with methylcellulose, hydroxypropoxylmethylcellulose, a surfactant, and water to prepare a plastic pug. The pug was extruded through a die to form a honeycomb segment formed product having a desired shape. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that cells that were open at a first end and sealed at a second end and cells that were sealed at the first end and open at the second end were alternately disposed. The honeycomb filter had a cross-section diameter of 144 mm and a length of 152 mm. The cell density was 46.5 cell/cm². The partition portions had a thickness of 0.31 mm. The exhaust gas inlet cells had an octagonal cross-section. The distance between opposite partition portions of the inlet cells was 1.36 mm. The outlet cells had a tetragonal cross-section. The distance between opposite partition portions of the outlet cells was 0.96 mm. The distance (cell pitch) between the central axis of the inlet cell and the central axis of the outlet cell was 1.47 mm. The honeycomb segments had a porosity of 50% and an average pore size of 15 µm. The porosity and the average pore size of the partition portions were measured with a mercury porosimeter (Auto Pore III 9405 manufactured by Micromeritics).

### Process of Forming Trapping Layer

During suction from the open ends of the honeycomb segments on the exhaust gas outlet side (outlet side), water mixed with a high porosity region forming member was ejected into the open ends of the honeycomb segments on the exhaust gas inlet side through a spray nozzle, supplying the high porosity region forming member as an air mist. The high porosity region forming member was deposited on the partition portions. The high porosity region forming member was carbon black particles having an average particle size of 0.01 µm. The amount of deposited high porosity region forming member was 1 g per liter of the base material of the honeycomb segments. The boundary side distance A and the partition side distance B of the high porosity region illustrated in Fig. 2 and the length ratio N and the porosity Q illustrated in Fig. 3 were adjusted by changing the mixing ratio of the high porosity region forming member to water, and the feed rate, the average particle size, and the material of the high porosity region forming member. Air containing SiC particles having an average particle size smaller than the average pore size of the partition was then introduced from open ends of the honeycomb segments on the exhaust gas inlet side while drawn in by suction from the outlet side of the honeycomb segments. The SiC particles were deposited on the surface layer of the partition portion of the inlet cell. There was a high porosity region forming member between the SiC particles and the partition portion in a region having the length ratio N from the sealed end of the inlet cell. Heat treatment in the atmosphere at 1300°C for two hours was performed to burn the high porosity region forming member and join the SiC particles deposited on the surface layers of the partitions together and the deposited SiC particles and SiC and Si particles constituting the partitions together. In addition to the formation of the trapping layer on the partition portion, the high porosity region forming member was burnt to form a high porosity region of the trapping layer disposed on a surface of the partition portion and disposed in a space between particles constituting the surface of the partition portion. The porosity P of the non-high-porosity region was adjusted by changing the amount, the feed rate, the average particle size, the material, and the heat-treatment conditions of the SiC particles. The average particle size of the raw material particles (the partition portions, the trapping layers, the high porosity region forming members, and the like) was the median size (D50) measured with a laser diffraction/scattering particle size distribution analyzer (LA-910 manufactured by Horiba, Ltd.) using water as a dispersion medium.

### Process of Forming Honeycomb Filter

A binder slurry prepared by kneading alumina silicate fiber, colloidal silica, poly(vinyl alcohol), SiC, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure.

### Measurement of Thickness t, Boundary Side Distance A, Partition Side Distance B, Porosities P and Q, and Length Ratio N

147 mm of the honeycomb filter calculated by subtracting the sealing depth (5 mm) from the total length 152 mm was divided into 40 equal pieces (3.675 mm pitches) to prepare 40 samples for observation, the cross-sections of which are perpendicular to the fluid flow direction. Five observation surfaces in the cross-section of the sample for observation, including the central observation surface of the cross-section and four observation surfaces located above, below, and to the left and right of the central observation surface, were cut from the sample for observation. SEM images of these observation surfaces were acquired in SEM observation. The length ratio N was determined by the method described above. The cross-section closest to a position 10% of the total length upstream from the downstream end (the sealed end) was the cross-section of the fourth sample for observation from the downstream end among the 40 samples. The thickness t, the boundary side distance A, the partition side distance B, and the porosities P and Q of this sample for observation were considered to be the thickness t, the boundary side distance A, the partition side distance B, and the porosities P and Q of the honeycomb filter 20 to be measured. The thickness t, the boundary side distance A, the partition side distance B, and the porosities P and Q were measured at the five observation surfaces in the sample for observation by the methods described above, and the measurements were independently averaged.

### Experimental Examples 1 to 6 (Example 1 being a reference example)

In Experimental Examples 1 to 6, honeycomb filters were manufactured that had a partition side distance B of 20 µm and different boundary side distances A and thickness direction distances C (the absolute value of (the boundary side distance A + the partition side distance B)). A honeycomb filter according to Experimental Example 1 had a thickness t of 60 µm, a boundary side distance A of 45 µm, a partition side distance B of 20 µm, a thickness direction distance C of 65 µm, a porosity P of 50%, a porosity Q of 65%, a porosity difference Q-P of 15%, and a length ratio N of 30%. Through the processes described above, the honeycomb filter had a high porosity region of the trapping layer disposed on a surface of the partition portion and disposed in a space between particles constituting the surface of the partition portion (see Figs. 1 and 2). A honeycomb filter according to Experimental Example 2 was manufactured through the same processes as in Experimental Example 1 except that the boundary side distance A was 40 µm, and the thickness direction distance C was 60 µm. A honeycomb filter according to Experimental Example 3 was manufactured through the same processes as in Experimental Example 1 except that the boundary side distance A was 30 µm, and the thickness direction distance C was 50 µm. A honeycomb filter according to Experimental Example 4 was manufactured through the same processes as in Experimental Example 1 except that the boundary side distance A was 20 µm, and the thickness direction distance C was 40 µm. A honeycomb filter according to Experimental Example 5 was manufactured through the same processes as in Experimental Example 1 except that the boundary side distance A was 10 µm, and the thickness direction distance C was 30 µm. A honeycomb filter according to Experimental Example 6 was manufactured through the same processes as in Experimental Example 1 except that the boundary side distance A was 0 µm, and the thickness direction distance C was 20 µm.

### Experimental Example 7 (reference)

A honeycomb filter according to Experimental Example 7 had a thickness t of 60 µm, a boundary side distance A of 0 µm, a partition side distance B of 0 µm, a thickness direction distance C of 0 µm, a porosity P of 50%, a porosity Q of 50%, a porosity difference Q-P of 0%, and a length ratio N of 0%. In Experimental Example 7, the Process of Forming Trapping Layer described above was performed without using the high porosity region forming member to manufacture a honeycomb filter having no high porosity region.

Experimental Examples 8 to 11 (Example 11 being a reference example)

In Experimental Examples 8 to 11, honeycomb filters were manufactured that had a boundary side distance A of 0 µm and different partition side distances B and thickness direction distances C. A honeycomb filter according to Experimental Example 8 had a thickness t of 60 µm, a boundary side distance A of 0 µm, a partition side distance B of 10 µm, a thickness direction distance C of 10 µm, a porosity P of 50%, a porosity Q of 65%, a porosity difference Q-P of 15%, and a length ratio N of 30%, and had a high porosity region. A honeycomb filter according to Experimental Example 9 was manufactured through the same processes as in Experimental Example 8 except that the partition side distance B was 20 µm, and the thickness direction distance C was 20 µm. A honeycomb filter according to Experimental Example 10 was manufactured through the same processes as in Experimental Example 8 except that the partition side distance B was 30 µm, and the thickness direction distance C was 30 µm. A honeycomb filter according to Experimental Example 11 was manufactured through the same processes as in Experimental Example 8 except that the partition side distance B was 35 µm, and the thickness direction distance C was 35 µm.

### Experimental Examples 12 to 15 (Example 15 being a reference example)

In Experimental Examples 12 to 15, honeycomb filters were manufactured that had a boundary side distance A of 30 µm and different partition side distances B and thickness direction distances C. A honeycomb filter according to Experimental Example 12 had a thickness t of 60 µm, a boundary side distance A of 30 µm, a partition side distance B of 0 µm, a thickness direction distance C of 30 µm, a porosity P of 50%, a porosity Q of 65%, a porosity difference Q-P of 15%, and a length ratio N of 30%, and had a high porosity region. A honeycomb filter according to Experimental Example 13 was manufactured through the same processes as in Experimental Example 12 except that the partition side distance B was 20 µm, and the thickness direction distance C was 50 µm. A honeycomb filter according to Experimental Example 14 was manufactured through the same processes as in Experimental Example 12 except that the partition side distance B was 30 µm, and the thickness direction distance C was 60 µm. A honeycomb filter according to Experimental Example 15 was manufactured through the same processes as in Experimental Example 12 except that the partition side distance B was 35 µm, and the thickness direction distance C was 65 µm.

### Experimental Examples 16 to 22 (Examples 16 and 22 being reference examples)

In Experimental Examples 16 to 22, honeycomb filters were manufactured that had a porosity P of 50% and different porosities Q and porosity differences Q-P. A honeycomb filter according to Experimental Example 16 had a thickness t of 60 µm, a boundary side distance A of 30 µm, a partition side distance B of 20 µm, a thickness direction distance C of 50 µm, a porosity P of 50%, a porosity Q of 55%, a porosity difference Q-P of 5%, and a length ratio N of 30%, and had a high porosity region. A honeycomb filter according to Experimental Example 17 was manufactured through the same process as in Experimental Example 16 except that the porosity Q was 60%, and the porosity difference Q-P was 10%. A honeycomb filter according to Experimental Example 18 was manufactured through the same process as in Experimental Example 16 except that the porosity Q was 70%, and the porosity difference Q-P was 20%. A honeycomb filter according to Experimental Example 19 was manufactured through the same process as in Experimental Example 16 except that the porosity Q was 80%, and the porosity difference Q-P was 30%. A honeycomb filter according to Experimental Example 20 was manufactured through the same process as in Experimental Example 16 except that the porosity Q was 90%, and the porosity difference Q-P was 40%. A honeycomb filter according to Experimental Example 21 was manufactured through the same process as in Experimental Example 16 except that the porosity Q was 96%, and the porosity difference Q-P was 46%. A honeycomb filter according to Experimental Example 22 was manufactured through the same process as in Experimental Example 16 except that the porosity Q was 98%, and the porosity difference Q-P was 48%.

### Experimental Examples 23 to 25 (Example 23 being a reference example)

In Experimental Examples 23 to 25, honeycomb filters were manufactured that had a porosity P of 45% and different porosities Q and porosity differences Q-P. A honeycomb filter according to Experimental Example 23 had a thickness t of 60 µm, a boundary side distance A of 30 µm, a partition side distance B of 20 µm, a thickness direction distance C of 50 µm, a porosity P of 45%, a porosity Q of 50%, a porosity difference Q-P of 5%, and a length ratio N of 30%, and had a high porosity region. A honeycomb filter according to Experimental Example 24 was manufactured through the same process as in Experimental Example 23 except that the porosity Q was 55%, and the porosity difference Q-P was 10%. A honeycomb filter according to Experimental Example 25 was manufactured through the same process as in Experimental Example 23 except that the porosity Q was 65%, and the porosity difference Q-P was 20%.

### Experimental Examples 26 to 31 (Examples 26 and 31 being reference examples)

In Experimental Examples 26 to 31, honeycomb filters were manufactured that had a porosity P of 60% and different porosities Q and porosity differences Q-P. A honeycomb filter according to Experimental Example 26 had a thickness t of 60 µm, a boundary side distance A of 30 µm, a partition side distance B of 20 µm, a thickness direction distance C of 50 µm, a porosity P of 60%, a porosity Q of 65%, a porosity difference Q-P of 5%, and a length ratio N of 30%, and had a high porosity region. A honeycomb filter according to Experimental Example 27 was manufactured through the same process as in Experimental Example 26 except that the porosity Q was 70%, and the porosity difference Q-P was 10%. A honeycomb filter according to Experimental Example 28 was manufactured through the same process as in Experimental Example 26 except that the porosity Q was 80%, and the porosity difference Q-P was 20%. A honeycomb filter according to Experimental Example 29 was manufactured through the same process as in Experimental Example 26 except that the porosity Q was 90%, and the porosity difference Q-P was 30%. A honeycomb filter according to Experimental Example 30 was manufactured through the same process as in Experimental Example 26 except that the porosity Q was 96%, and the porosity difference Q-P was 36%. A honeycomb filter according to Experimental Example 31 was manufactured through the same process as in Experimental Example 26 except that the porosity Q was 98%, and the porosity difference Q-P was 38%.

### Experimental Examples 32 to 37 (Examples 32 and 37 being reference examples)

Honeycomb filters having different length ratios N were manufactured in Experimental Examples 32 to 37. A honeycomb filter according to Experimental Example 32 had a thickness t of 60 µm, a boundary side distance A of 30 µm, a partition side distance B of 20 µm, a thickness direction distance C of 50 µm, a porosity P of 50%, a porosity Q of 70%, a porosity difference Q-P of 20%, and a length ratio N of 45%, and had a high porosity region. A honeycomb filter according to Experimental Example 33 was manufactured through the same process as in Experimental Example 32 except that the length ratio N was 40%. A honeycomb filter according to Experimental Example 34 was manufactured through the same process as in Experimental Example 32 except that the length ratio N was 25%. A honeycomb filter according to Experimental Example 35 was manufactured through the same process as in Experimental Example 32 except that the length ratio N was 20%. A honeycomb filter according to Experimental Example 36 was manufactured through the same process as in Experimental Example 32 except that the length ratio N was 15%. A honeycomb filter according to Experimental Example 37 was manufactured through the same process as in Experimental Example 32 except that the length ratio N was 10%.

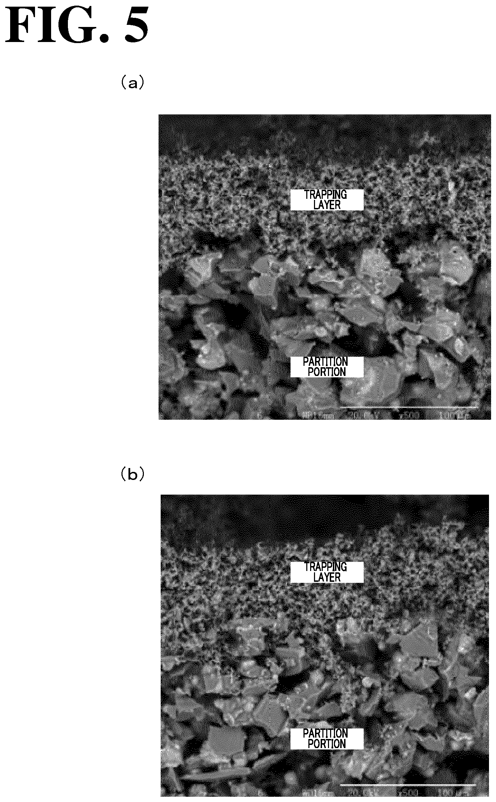

Fig. 5 is a cross-sectional photograph of inlet cells of the fourth sample for observation from the downstream end among the 40 samples for observation in the honeycomb filters according to Experimental Examples 4 and 7. Fig. 5(a) is a photograph of Experimental Example 4, and Fig. 5(b) is a photograph of Experimental Example 7. As illustrated in Fig. 5(a), Experimental Example 4 had a high porosity region of the trapping layer disposed on a surface of the partition portion and disposed in a space between particles constituting the surface of the partition portion. The high porosity region had a higher porosity than the other region (non-high-porosity region) of the trapping layer. In contrast, in Experimental Example 7 illustrated in Fig. 5(b), the density of particles of the trapping layer disposed in a space between particles constituting a surface of the partition portion was substantially the same as the other region of the trapping layer, and no high porosity region was formed. Table 1 summarizes the measurement results and test results described below for the honeycomb filters according to Experimental Examples 1 to 37.

**Table 1**

| EXAMPLE NO. | TRAPPING LAYER THICKNESS t [µm] | BOUNDARY SIDE DISTANCEA [µm] | PARTITION SIDE DISTANCE B[µm] | THICKNESS DIRECTION DISTANCE C [µm] | POROSITY P[%] | POROSITY Q[%] | POROSITY DIFFERENCE Q-P [%] | LENGTH RATIO N (%) | CATALYST LOADING PROCESS PEELING ( 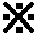 1) | HIHG LOAD HIGH ROTATIONAL SPEED PEELING ( 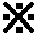 1) | HIGH LOAD HIGH ROTATIONAL SPEED PRESSURE LOSS [kPa] |
|---|---|---|---|---|---|---|---|---|---|---|---|
| *** EXAMPLE 1 | 60 | 45 | 20 | 65 | 50 | 65 | 15 | 30 | ○ | × | 42 |
| EXAMPLE 2 | 60 | 40 | 20 | 60 | 50 | 65 | 15 | 30 | ○ | ○ | 23 |
| EXAMPLE 3 | 60 | 30 | 20 | 50 | 50 | 65 | 15 | 30 | ○ | ○ | 23 |
| EXAMPLE 4 | 60 | 20 | 20 | 40 | 50 | 65 | 15 | 30 | ○ | ○ | 24 |
| EXAMPLE 5 | 60 | 10 | 20 | 30 | 50 | 65 | 15 | 30 | ○ | ○ | 26 |
| EXAMPLE 6 | 60 | 0 | 20 | 20 | 50 | 65 | 15 | 30 | ○ | ○ | 28 |
| *** EXAMPLE 7 | 60 | 0 | 0 | 0 | 50 | 50 | 0 | - | ○ | ○ | 37 |
| EXAMPLE 8 | 60 | 0 | 10 | 10 | 50 | 65 | 15 | 30 | ○ | ○ | 31 |
| EXAMPLE 9 | 60 | 0 | 20 | 20 | 50 | 65 | 15 | 30 | ○ | ○ | 27 |
| EXAMPLE 10 | 60 | 0 | 30 | 30 | 50 | 65 | 15 | 30 | ○ | ○ | 25 |
| *** EXAMPLE 11 | 60 | 0 | 35 | 35 | 50 | 65 | 15 | 30 | ○ | ○ | 36 |
| EXAMPLE 12 | 60 | 30 | 0 | 30 | 50 | 65 | 15 | 30 | ○ | ○ | 25 |
| EXAMPLE 13 | 60 | 30 | 20 | 50 | 50 | 65 | 15 | 30 | ○ | ○ | 25 |
| EXAMPLE 14 | 60 | 30 | 30 | 60 | 50 | 65 | 15 | 30 | ○ | ○ | 22 |
| *** EXAMPLE 15 | 60 | 30 | 35 | 65 | 50 | 65 | 15 | 30 | ○ | ○ | 37 |
| *** EXAMPLE 16 | 60 | 30 | 20 | 50 | 50 | 55 | 5 | 30 | ○ | ○ | 37 |
| EXAMPLE 17 | 60 | 30 | 20 | 50 | 50 | 60 | 10 | 30 | ○ | ○ | 24 |
| EXAMPLE 18 | 60 | 30 | 20 | 50 | 50 | 70 | 20 | 30 | ○ | ○ | 23 |
| EXAMPLE 19 | 60 | 30 | 20 | 50 | 50 | 80 | 30 | 30 | ○ | ○ | 23 |
| EXAMPLE 20 | 60 | 30 | 20 | 50 | 50 | 90 | 40 | 30 | ○ | ○ | 23 |
| EXAMPLE 21 | 60 | 30 | 20 | 50 | 50 | 96 | 46 | 30 | ○ | ○ | 23 |
| *** EXAMPLE 22 | 60 | 30 | 20 | 50 | 50 | 98 | 48 | 30 | ○ | × | 43 |
| *** EXAMPLE 23 | 60 | 30 | 20 | 50 | 45 | 50 | 5 | 30 | ○ | ○ | 39 |
| EXAMPLE 24 | 60 | 30 | 20 | 50 | 45 | 55 | 10 | 30 | ○ | ○ | 25 |
| EXAMPLE 25 | 60 | 30 | 20 | 50 | 45 | 65 | 20 | 30 | ○ | ○ | 24 |
| *** EXAMPLE 26 | 60 | 30 | 20 | 50 | 60 | 65 | 5 | 30 | ○ | ○ | 36 |
| EXAMPLE 27 | 60 | 30 | 20 | 50 | 60 | 70 | 10 | 30 | ○ | ○ | 23 |
| EXAMPLE 28 | 60 | 30 | 20 | 50 | 60 | 80 | 20 | 30 | ○ | ○ | 22 |
| EXAMPLE 29 | 60 | 30 | 20 | 50 | 60 | 90 | 30 | 30 | ○ | ○ | 22 |
| EXAMPLE 30 | 60 | 30 | 20 | 50 | 60 | 96 | 36 | 30 | ○ | ○ | 22 |
| *** EXAMPLE 31 | 60 | 30 | 20 | 50 | 60 | 98 | 38 | 30 | ○ | × | 42 |
| *** EXAMPLE 32 | 60 | 30 | 20 | 50 | 50 | 70 | 20 | 45 | × | ○ | 44 |
| EXAMPLE 33 | 60 | 30 | 20 | 50 | 50 | 70 | 20 | 40 | ○ | ○ | 22 |
| EXAMPLE 34 | 60 | 30 | 20 | 50 | 50 | 70 | 20 | 25 | ○ | ○ | 23 |
| EXAMPLE 35 | 60 | 30 | 20 | 50 | 50 | 70 | 20 | 20 | ○ | ○ | 23 |
| EXAMPLE 36 | 60 | 30 | 20 | 50 | 50 | 70 | 20 | 15 | ○ | ○ | 24 |
| *** EXAMPLE 37 | 60 | 30 | 20 | 50 | 50 | 70 | 20 | 10 | ○ | ○ | 35 |

| | | | | | | | | | | | |
|---|---|---|---|---|---|---|---|---|---|---|---|
| 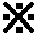 1: O No Peeling; × Peeling Present Wherein * denotes a reference example. | | | | | | | | | | | |

Trapping Layer Peeling Test in Catalyst Loading Process In a catalyst loading process of loading the honeycomb filter thus manufactured with a catalyst, the trapping layer was examined for the presence of peeling. First, the catalyst loading process is described. Alumina, platinum, and a ceria-based material were mixed at a ratio of 7:0.5:2.5 based on the mass ratio to prepare an aqueous catalyst slurry. The ceria-based material was Ce:Zr:Pr:Y:Mn = 60:20:10:5:5 based on the mass ratio. The outlet end face (exhaust gas outlet side) of the honeycomb segment was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of the honeycomb filter was 30 g/L. After this catalyst loading process, the trapping layer was examined for the presence of peeling. More specifically, air was blown from the outlet end of the honeycomb filter at a pressure of 0.4 MPa and a nozzle diameter of 3 mm to check for peeling of the trapping layer. Thus, the presence of peeling in the catalyst loading process was examined.

### Pressure Loss Test at High Rotational Speed under High Load

After the catalyst loading process, the honeycomb filter was installed immediately downstream of a turbocharger for a 2.2-L diesel engine. After the engine was stably run at idle, the engine was instantaneously activated to 4100 rpm and 250 Nm. The pressure loss behavior of the honeycomb filter was measured, and the maximum pressure loss was evaluated as the pressure loss of the honeycomb filter at a high rotational speed under high load.

### Peeling Test at High Rotational Speed under High Load

After the measurement of pressure loss at a high rotational speed under high load, air was blown from the outlet end of the honeycomb filter at a pressure of 0.4 MPa and a nozzle diameter of 3 mm to check for peeling of the trapping layer. Thus, the presence of peeling at a high rotational speed under high load was examined.

### Experimental Results

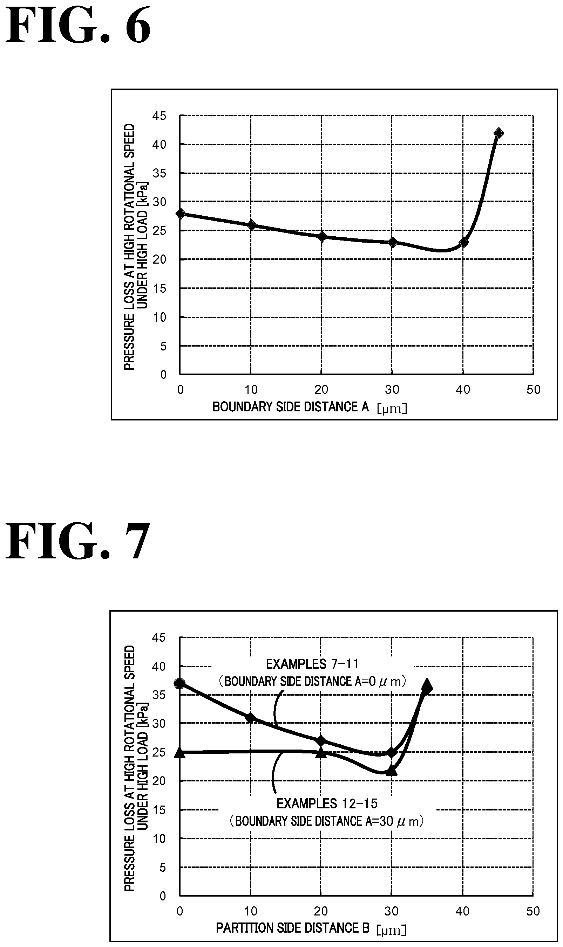

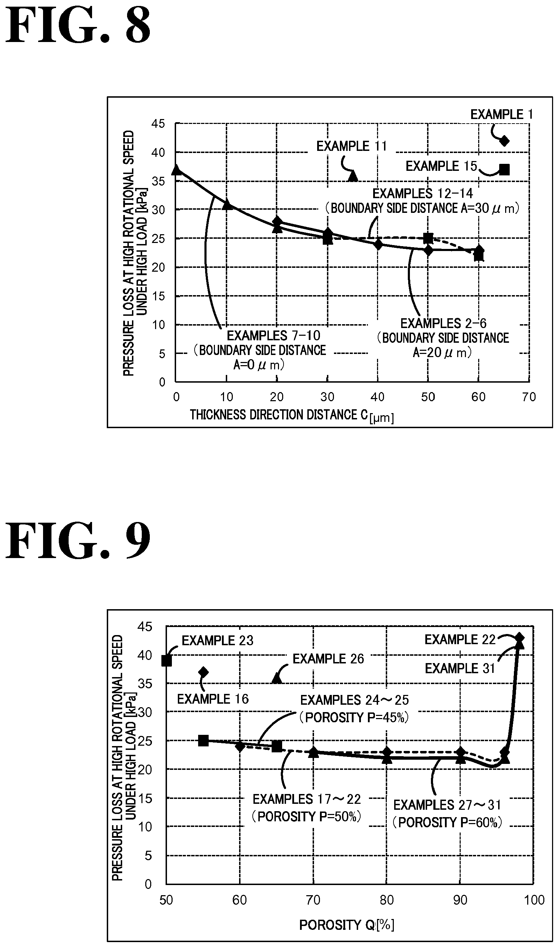

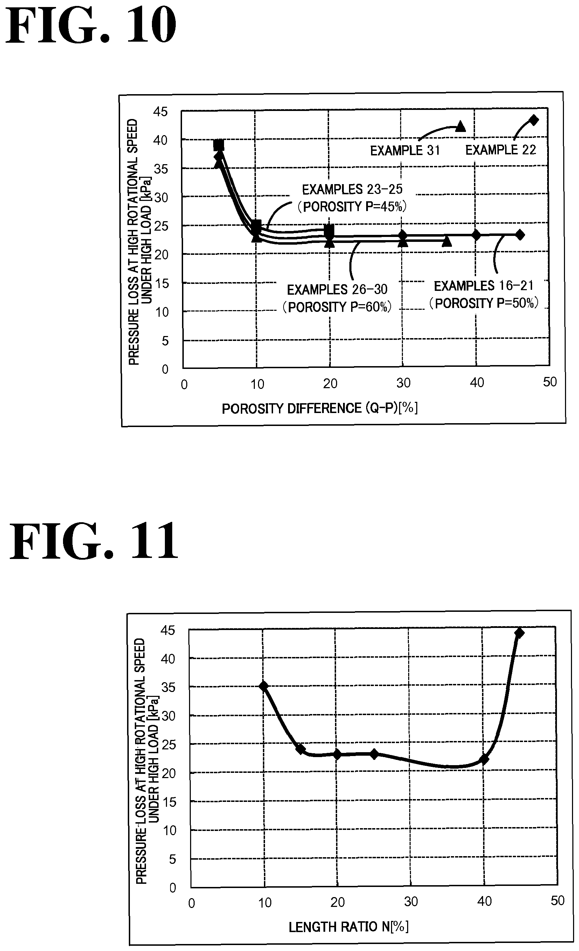

Table 1 summarizes the test results for Experimental Examples 1 to 37 (Examples 1, 7, 15, 16, 22, 23, 26, 31, 32 and 37 being reference examples). Fig. 6 depicts the test results for Experimental Examples 1 to 6 and includes measurement results of pressure loss (kPa) at a high rotational speed under high load as a function of boundary side distance A (µm). Fig. 7 depicts the test results for Experimental Examples 7 to 15 and includes measurement results of pressure loss (kPa) at a high rotational speed under high load as a function of partition side distance B (µm). Fig. 8 depicts the test results for Experimental Examples 1 to 15 and includes measurement results of pressure loss (kPa) at a high rotational speed under high load as a function of thickness direction distance C (µm). Fig. 9 depicts the test results for Experimental Examples 16 to 31 and includes measurement results of pressure loss (kPa) at a high rotational speed under high load as a function of porosity Q(%). Fig. 10 depicts the test results for Experimental Examples 16 to 31 and includes measurement results of pressure loss (kPa) at a high rotational speed under high load as a function of porosity difference Q-P (%). Fig. 11 depicts the test results for Experimental Examples 32 to 37 and includes measurement results of pressure loss (kPa) at a high rotational speed under high load as a function of length ratio N (%).

Table 1 and Fig. 6 show that a boundary side distance A of 40 µm or less resulted in lower pressure loss at a high rotational speed under high load than the case where the boundary side distance A was more than 40 µm. It was also found that the boundary side distance A was preferably 10 µm or more and 40 µm or less, more preferably 20 µm or more and 40 µm or less, still more preferably 30 µm or more and 40 µm or less. The results for Experimental Example 1 show that a boundary side distance A of more than 40 µm resulted in peeling of the trapping layer under high load. This is probably because a boundary side distance A of more than 40 µm resulted in insufficient bonding strength between the trapping layer and the partition portion.

Table 1 and Fig. 7 show that a partition side distance B of 30 µm or less resulted in lower pressure loss at a high rotational speed under high load than the case where the partition side distance B was more than 30 µm. It was also found that the partition side distance B was preferably 10 µm or more and 30 µm or less, more preferably 20 µm or more and 30 µm or less.

Table 1 and Fig. 8 show that except for Experimental Example 1 having a boundary side distance A of more than 40 µm and Experimental Examples 11 and 15 having a partition side distance B of more than 30 µm, pressure loss at a high rotational speed under high load decreased with increasing thickness direction distance C. It was also found that the thickness direction distance C was preferably 20 µm or more, more preferably 30 µm or more, still more preferably 40 µm or more, still more preferably 50 µm or more.

Table 1 and Fig. 9 show that except for Experimental Examples 16, 23, and 26 having a porosity difference Q-P of less than 10%, pressure loss at a high rotational speed under high load decreased with increasing porosity Q in the range of 55% to 96%. It was also found that a porosity Q of more than 96% resulted in peeling of the trapping layer at a high rotational speed under high load and a marked increase in pressure loss at a high rotational speed under high load. The reason for peeling of the trapping layer at a high rotational speed under high load is probably that the trapping layer had low strength at a porosity Q of more than 96%. The reason for the increase in pressure loss at a high rotational speed under high load is that peeling of the trapping layer resulted in the deposition of EM in the space between particles constituting the surface of the partition portion and thereby increased permeation resistance.

Table 1 and Fig. 10 show that except for Experimental Examples 22 and 31 having a porosity Q of more than 96%, the pressure loss at a high rotational speed under high load decreased with increasing porosity difference Q-P. In particular, it was found that the porosity difference Q-P was preferably 10% or more, more preferably 20% or more, still more preferably 30% or more.

Table 1 and Fig. 11 show that a length ratio N of 15% or more and 40% or less resulted in low pressure loss at a high rotational speed under high load. It was also found that the length ratio N was preferably 20% or more. The results of Experimental Example 32 show that a length ratio N of more than 40% resulted in an increase in pressure loss at a high rotational speed under high load. A plausible reason for this is described below. In Experimental Examples 1 to 37, the outlet end face (exhaust gas outlet side) of the honeycomb segments was immersed in the catalyst slurry up to a predetermined height in the catalyst loading process. The catalyst slurry was drawn in by suction from the inlet end face (exhaust gas inlet side) at a predetermined suction pressure and suction flow rate for a predetermined time. When the catalyst is loaded in this manner, the flow rate of the catalyst slurry passing through the partition portion between the outlet cell and the inlet cell increases with decreasing distance from the opening of the inlet cell. Thus, the presence of a high porosity region having relatively low permeation resistance in a region having such a high flow rate which is separated from the downstream end by a length that is more than 40% of the total length probably results in peeling of the high porosity region while the catalyst slurry passes through the partition portion. Furthermore, peeling of the trapping layer in the catalyst loading process can accelerate PM deposition on the partition portion surface from which the trapping layer has been peeled. This can increase pressure loss at a high rotational speed under high load.

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20), comprising:
porous partition portions (22) forming a plurality of cells (23), each of the cells (23) being open at one end and sealed at the other end and serving as a flow path of a fluid; and
a trapping layer (24) for trapping and removing solid components contained in the fluid, the trapping layer (24) being disposed on the surface of the partition portion (22),
wherein the trapping layer (24) includes a high porosity region (24b) on the partition portion (22) side which includes a space between particles constituting the surface of the partition portion (22),
the high porosity region (24b) has a 10% or more higher porosity than a non-high-porosity region (24a), which is a region of the trapping layer (24) other than the high porosity region (24b), wherein the high porosity region (24b) is formed to have a porosity of 96% or less, and
the high porosity region (24b) meets the following (a) and (b):
(a) the high porosity region (24b) has a boundary side distance A of 40 µm or less, the boundary side distance A being a distance in the thickness direction of the trapping layer (24) from an average line of an outermost contour of particles constituting the surface of the partition portion (22) to the boundary between the high porosity region (24b) and the non-high-porosity region (24a), the boundary side distance A being determined by the method as set out in the description, the boundary between the high porosity region and the non-high-porosity region being a line having a level at which the variation in density of the trapping layer is largest in the height direction of the trapping layer, the height direction corresponding to the thickness direction of the trapping layer, and the direction from the high porosity region to the non-high-porosity region being positive; (b) the high porosity region (24b) has a partition side distance B of 30 µm or less, the partition side distance B being a distance in the thickness direction of the trapping layer (24) from an average line of an outermost contour of particles constituting the surface of the partition portion (22) to a partition portion (22) side end of a present area of particles constituting the high porosity region (24b), the partition side distance B being determined by the method as set out in the description, and the direction from the trapping layer to the partition portion being positive;
and wherein the present area of the high porosity region is an area of a length ratio N from the sealed end of the cell on the fluid outlet side relative to a total length from the open end of the cell to the sealed end, and the length ratio N is a value of 15% or more and 40% or less, wherein the high porosity region does not necessarily exist in the entire area having the length ratio N from the sealed end defined as the present area of the high porosity region
such that a position represented by the length ratio N is the high porosity region closest to the open end of the cell (23).

2. The honeycomb filter (20) according to claim 1, wherein the high porosity region (24b) further meets the following (c):
(c) the high porosity region (24b) has a thickness direction distance C of 20 µm or more, the thickness direction distance C being a distance in the thickness direction of the trapping layer (24) from the boundary between the high porosity region (24b) and the non-high-porosity region (24a) to an end of a present area of particles constituting the high porosity region (24b) on the partition portion (22) side, the boundary between the high porosity region and the non-high-porosity region being a line having a level at which the variation in density of the trapping layer is largest in the height direction of the trapping layer, the height direction corresponding to the thickness direction of the trapping layer; that is, the thickness direction distance C is the absolute value of [the boundary side distance A + the partition side distance B], the thickness direction distance C being determined by the method as set out in the description.

3. The honeycomb filter (20) according to any one of Claims 1 to 2, further comprising a catalyst.

## Patentansprüche

1. Wabenfilter (20), das Folgendes umfasst:
poröse Trennwandabschnitte (22), die eine Vielzahl von Zellen (23) ausbilden, wobei jede der Zellen (23) an einem Ende offen und an dem anderen Ende verschlossen ist und als Durchflusspfad eines Fluids dient; und
eine Einfangschicht (24) zum Einfangen und Entfernen von Feststoffkomponenten, die in dem Fluid enthalten sind, wobei die Einfangschicht (24) auf der Oberfläche des Trennwandabschnitts (22) angeordnet ist,
wobei die Einfangschicht (24) einen hochporösen Bereich (24b) auf der Seite des Trennwandabschnitts (22) umfasst, der einen Leerraum zwischen Teilchen umfasst, die die Oberfläche des Trennwandabschnitts (22) ausbilden,
wobei der hochporöse Bereich (24b) eine 10 % oder mehr höhere Porosität als ein nicht hochporöser Bereich (24a) aufweist, der ein Bereich der Einfangschicht (24) mit Ausnahme des hochporösen Bereichs (24b) ist, wobei der hochporöse Bereich (24b) so ausgebildet ist, dass er eine Porosität von 96 % oder weniger aufweist, und
der hochporöse Bereich (24b) die folgenden Kriterien (a) und (b) erfüllt:
(a) der hochporöse Bereich (24b) weist einen grenzseitigen Abstand A von 40 µm oder weniger auf, wobei der grenzseitige Abstand A ein Abstand in Dickenrichtung der Einfangschicht (24) von einer Durchschnittslinie eines äußersten Umrisses von Teilchen, aus denen die Oberfläche des Trennwandabschnitts (22) besteht, bis zur Grenze zwischen dem hochporösen Bereich (24b) und dem nicht hochporösen Bereich (24a) ist, wobei der grenzseitige Abstand A durch ein in der Beschreibung dargelegtes Verfahren bestimmt wird, wobei die Grenze zwischen dem hochporösen Bereich und dem nicht hochporösen Bereich eine Linie ist, die ein Niveau aufweist, auf dem die Dichtevariation der Einfangschicht in Höhenrichtung der Einfangschicht am größten ist, wobei die Höhenrichtung der Dickenrichtung der Einfangschicht entspricht, und die Richtung von dem hochporösen Bereich zu dem nicht hochporösen Bereich positiv ist;
(b) der hochporöse Bereich (24b) weist einen trennwandseitigen Abstand B von 30 µm oder weniger auf, wobei der trennwandseitige Abstand B ein Abstand in Dickenrichtung der Einfangschicht (24) von einer Durchschnittslinie eines äußersten Umrisses von Teilchen, aus denen die Oberfläche des Trennwandabschnitts (22) besteht, bis zu einem Ende auf der Seite des Trennwandabschnitts (22) einer vorhandenen Fläche von Teilchen ist, aus denen der hochporöse Bereich (24b) besteht, wobei der trennwandseitige Abstand B durch das in der Beschreibung dargelegte Verfahren bestimmt wird, und die Richtung von der Einfangschicht zu dem Trennwandabschnitt positiv ist;
und wobei die vorhandene Fläche des hochporösen Bereichs eine Fläche eines Längenverhältnisses N von dem verschlossenen Ende der Zelle auf der Fluidauslassseite in Bezug auf eine Gesamtlänge von dem offenen Ende der Zelle zu dem verschlossenen Ende ist, und das Längenverhältnis N ein Wert von 15 % oder mehr und 40 % oder weniger ist, wobei der hochporöse Bereich nicht notwendigerweise auf der gesamten Fläche mit dem Längenverhältnis N von dem geschlossenen Ende vorliegt, die als die vorhandene Fläche des hochporösen Bereichs definiert ist,
sodass eine durch das Längenverhältnis N dargestellte Position der hochporöse Bereich ist, der dem offenen Ende der Zelle (23) am nächsten ist.

2. Wabenfilter (20) nach Anspruch 1, wobei der hochporöse Bereich (24b) außerdem das folgende Kriterium (c) erfüllt:
(c) der hochporöse Bereich (24b) weist einen Dickenrichtungsabstand C von 20 µm oder mehr auf, wobei der Dickenrichtungsabstand C ein Abstand in Dickenrichtung der Einfangschicht (24) von der Grenze zwischen dem hochporösen Bereich (24b) und dem nicht hochporösen Bereich (24a) bis zu einem Ende auf der Seite des Trennwandabschnitts (22) einer vorhandenen Fläche von Teilchen ist, aus denen der hochporöse Bereich (24b) besteht, wobei die Grenze zwischen dem hochporösen Bereich und dem nicht hochporösen Bereich eine Linie ist, die ein Niveau aufweist, auf dem die Dichtevariation der Einfangschicht in Höhenrichtung der Einfangschicht am größten ist, wobei die Höhenrichtung der Dickenrichtung der Einfangschicht entspricht; das bedeutet, dass der Dickenrichtungsabstand C der Absolutwert von [der grenzseitige Abstand A + der trennwandseitige Abstand B] ist, wobei der Dickenrichtungsabstand C durch das in der Beschreibung dargelegte Verfahren bestimmt wird.

3. Wabenfilter (20) nach einem der Ansprüche 1 bis 2, das außerdem einen Katalysator umfasst.

## Revendications

1. Filtre en nid d'abeilles (20), comprenant :
des parties de séparation poreuses (22) formant une pluralité de cellules (23), chacune des cellules (23) étant ouverte à une extrémité et scellée à l'autre extrémité et servant de trajet d'écoulement d'un fluide ; et
une couche de piégeage (24) pour piéger et éliminer des composants solides contenus dans le fluide, la couche de piégeage (24) étant disposée sur la surface de la partie de séparation (22),
dans lequel la couche de piégeage (24) inclut une région à porosité élevée (24b) sur le côté de la partie de séparation (22) qui inclut un espace entre des particules constituant la surface de la partie de séparation (22),
la région à porosité élevée (24b) présente une porosité supérieure ou égale à 10 % par rapport à une région à porosité non élevée (24a), qui est une région de la couche de piégeage (24) différente de la région à porosité élevée (24b), dans lequel la région à porosité élevée (24b) est formée pour présenter une porosité inférieure ou égale à 96 %, et
la région à porosité élevée (24b) satisfait aux conditions (a) et (b) suivantes :
(a) la région à porosité élevée (24b) présente une distance latérale limite A inférieure ou égale à 40 pm, la distance latérale limite A étant une distance dans la direction de l'épaisseur de la couche de piégeage (24) à partir d'une ligne moyenne d'un contour le plus extérieur de particules constituant la surface de la partie de séparation (22) jusqu'à la limite entre la région à porosité élevée (24b) et la région à porosité non élevée (24a), la distance latérale limite A étant déterminée par le procédé tel que défini dans la description, la limite entre la région à porosité élevée et la région à porosité non élevée étant une ligne présentant un niveau auquel la variation de densité de la couche de piégeage est la plus grande dans la direction de hauteur de la couche de piégeage, la direction de hauteur correspondant à la direction d'épaisseur de la couche de piégeage, et la direction de la région à porosité élevée à la région à porosité non élevée étant positive ; (b) la région à porosité élevée (24b) présente une distance latérale de séparation B inférieure ou égale à 30 pm, la distance latérale de séparation B étant une distance dans la direction d'épaisseur de la couche de piégeage (24) à partir d'une ligne moyenne d'un contour le plus extérieur de particules constituant la surface de la partie de séparation (22) jusqu'à une extrémité latérale de partie de séparation (22) d'une aire actuelle de particules constituant la région à porosité élevée (24b), la distance latérale de séparation B étant déterminée par le procédé tel que défini dans la description, et la direction de la couche de piégeage jusqu'à la séparation étant positive ;
et dans lequel l'aire actuelle de la région à porosité élevée est une aire d'un rapport de longueurs N à partir de l'extrémité scellée de la cellule sur le côté de sortie de fluide par rapport à une longueur totale à partir de l'extrémité ouverte de la cellule jusqu'à l'extrémité scellée, et le rapport de longueurs N est une valeur supérieure ou égale à 15 % et inférieure ou égale à 40 %, dans lequel la région à porosité élevée n'existe pas nécessairement dans l'aire entière présentant le rapport de longueurs N à partir de l'extrémité scellée définie comme l'aire actuelle de la région à porosité élevée
de sorte qu'une position représentée par le rapport de longueurs N est la région à porosité élevée la plus proche de l'extrémité ouverte de la cellule (23).

2. Filtre en nid d'abeilles (1) selon la revendication 1, dans lequel la région à porosité élevée (24b) répond en outre aux conditions suivantes (c) :
(c) la région à porosité élevée (24b) présente une distance de direction d'épaisseur C supérieure ou égale à 20 pm, la distance de direction d'épaisseur C étant une distance dans la direction d'épaisseur de la couche de piégeage (24) à partir de la limite entre la région à porosité élevée (24b) et la région à porosité non élevée (24a) jusqu'à une extrémité d'une aire actuelle de particules constituant la région à porosité élevée (24b) sur le côté de la partie de séparation (22), la limite entre la région à porosité élevée et la région à porosité non élevée étant une ligne présentant un niveau auquel la variation de densité de la couche de piégeage est la plus grande dans la direction de la hauteur de la couche de piégeage, la direction de la hauteur correspondant à la direction d'épaisseur de la couche de piégeage ; c'est-à-dire que la distance de direction d'épaisseur C est la valeur absolue de [la distance latérale limite A + la distance latérale de séparation B], la distance de direction d'épaisseur C étant déterminée par le procédé selon la description.

3. Filtre en nid d'abeilles (20) selon l'une quelconque des revendications 1 à 2, comprenant en outre un catalyseur.
